Europäisches Patentamt

**European Patent Office**

Office européen des brevets

(19)

(11) Numéro de publication: **0 031 742**
**B1**

(12) **FASCICULE DE BREVET EUROPEEN**

(45) Date de publication du fascicule du brevet: **14.12.83**

(51) Int. Cl.³: **B 29 F 3/04**

(21) Numéro de dépôt: **80401732.5**

(22) Date de dépôt: **04.12.80**

(54) **Enceinte d'extrusion à distribution circulaire contrôlée de la matière extrudée et à filière incorporée.**

(30) Priorité: **19.12.79 FR 7931048**
**21.11.80 FR 8024721**

(43) Date de publication de la demande:
**08.07.81 Bulletin 81/27**

(45) Mention de la délivrance du brevet:
**14.12.83 Bulletin 83/50**

(84) Etats contractants désignés:
**AT BE CH DE GB IT LI LU NL SE**

(56) Documents cités:
**CH - A - 491 737**
**FR - A - 828 626**
**FR - A - 1 224 194**
**FR - A - 2 380 123**
**US - A - 1 914 689**
**US - A - 2 824 337**
**US - A - 3 339 235**
**US - A - 3 357 050**

(73) Titulaire: **EROPOL, Société Anonyme**
**249, rue Paul Doumer**
**F-78510 Triel-sur-Seine Yvelines (FR)**

(72) Inventeur: **Figuereo, Blaise François**
**344, Rue Paul Doumer**
**F-78510 Triel-sur-Seine (FR)**

(74) Mandataire: **Lordonnois, Michel**
**B.P. 4**
**F-91230 Montgeron (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Enceinte d'extrusion à distribution circulaire contrôlée de la matière extrudée et à filtière incorporée

La présente invention concerne une enceinte d'extrusion à distribution circulaire contrôlée de la matière extrudée et à filtière incorporée. Plus particulièrement, elle a pour objet une enceinte ou tête d'extrusion, adaptable par sa base sur la sortie d'une boudineuse et portant en tête une filtière conçue pour obtenir le profilé désiré, cette enceinte incorporant des distributeurs radiaux, équidistants sur la même circonférence et adaptés pour calibrer et commander le débit des veines de matière extrudée, provenant de la boudineuse en passant par des orifices distribués en couronne, traversant la plaque de base de cette enceinte, et équilibrer ces veines de matière à la géométrie du profilé avant leur entrée dans la filtière.

Dans la technique actuelle de l'extrusion des matières thermoplastiques, par exemple, on connaît plusieurs types de têtes d'extrusion qui sont conçus pour essayer de maîtriser les trois zones principales de turbulence de la matière sortant de la boudineuse avant son entrée dans la filtière, ces zones étant situées, la première en bout de la vis de la boudineuse, la seconde en amont de la filtière et la troisième en aval de celle-ci. Pour tenter d'éliminer ces turbulences, ces têtes d'extrusion connues incorporent, pour la plupart, des dispositifs destinés à orienter l'écoulement de la matière extrudée, ainsi que son débit, mais ces dispositifs sont en général difficiles à régler pour obtenir un profilé à sa géométrie exacte.

On connaît, par exemple, une tête d'extrusion décrite dans le brevet US—A—3 357 050, qui comporte une chambre intérieure conique dans laquelle est logé axialement un noyau conique. La matière extrudée s'écoule circonférentiellement entre les surfaces coniques et son débit, de même que son calibrage, peuvent être réglés par déplacement axial de ces surfaces l'une par rapport à l'autre. Cependant, cette tête d'extrusion permet seulement l'obtention de profilés tubulaires dont l'épaisseur est sensiblement constante.

De plus, ce type connu de tête d'extrusion était difficile à adapter pour l'obtention de profilés d'autre géométrie que circulaire et de paroi d'épaisseur variable. En conséquence, au cours de ces dernières années, l'inventeur s'est penché sur ce problème et a conçu une tête d'extrusion qui permettait de diriger l'écoulement des veines de matière extrudée provenant d'orifices situés dans le plateau de base de la tête ou plateau de sortie de la boudineuse. Ces veines de matière, à la sortie des orifices, forçaient des opercules ou clapets articulés, distribués autour d'un cône central, à s'ouvrir sous leur poussée en direction de la filtière et, étant donné que l'ouverture de ces opercules était réglable de l'extérieur au moyen d'une vis de butée, il était pour ainsi dire possible de régler le débit des veines autour du cône, en les laminant plus ou moins, tout en leur donnant une direction centrée sur la filtière (FR—A—2 380 123).

Cependant, malgré ces améliorations notables apportées aux techniques d'extrusion par cette conception, il était toujours difficile d'obtenir, au moyen de celle-ci, des profilés extrudés de géométrie parfaite et constante. En conséquence, l'inventeur s'est donc penché sur ce problème et a trouvé qu'en remplaçant les opercules articulés, qui s'ouvraient sous la poussée des veines de matière, par des distributeurs radiaux et coulissants, réglables à une section d'ouverture ou de calibrage déterminée, il était possible de commander et de contrôler le débit d'écoulement ainsi que la section de chaque veine, de manière constante, en fonction de la géométrie du profil à extruder. De plus, après avoir réalisé de nombreux essais, l'inverteur a déterminé que le profilé extrudé conservait une géométrie parfaitement constante au cours de l'extrusion, lorsque toutes les veines calibrées parcouraient sensiblement la même distance entre leur point de distribution ou de calibrage et leur point d'entrée dans la face arrière de la filtière. Afin d'obtenir une telle distance de parcours, sensiblement équivalente pour chaque veine de matière calibrée, sortant de chacun des distributeurs placés radialement en couronne, l'inventeur a été conduit à conformer la face arrière d'entrée de la filtière d'extrusion, suivant une configuration en relation d'homothétie avec la configuration des points de distribution de la couronne, lorsque les distributeurs étaient en position réglée de calibrage.

Par suite, sur la base de ces critères, l'inventeur a conçu une enceinte d'extrusion perfectionnée, qui permet l'obtention en sortie de filtière d'un profilé tubulaire ou non, de géométrie constante, cette enceinte avec sa filtière de tête faisant l'objet dela présente invention.

Cette enceinte perfectionnée, conforme à l'invention, adaptée pour extruder notamment des profilés en matières thermoplastiques de section tubulaire ou non, et pour être montée sur la sortie d'une boudineuse, comporte une plaque de base et de montage en bout de la boudineuse, traversée par des orifices de formation de veines de matière, situés sur une même circonférence et équidistants entre eux, et pourvue, à l'intérieur de l'enceinte, d'un tronc de cône percé d'orifices, situés dans le prolongement des orifices de formation de veines et débouchant dans sa surface latérale, ce tronc de cône étant entouré par des distributeurs concentriques radiaux, situés en correspondance radiale avec ses orifices de passage de veines et montés de manière à pouvoir coulisser parallèlement à son axe central ou axe longitudinal de l'enceinte, suite à une opération de réglage de position commandée depuis l'extérieur à cette dernière, cette enceinte d'extrusion étant remarquable du fait que chaque distributeur est constitué par un coulisseau ayant un corps cylindrique de coulissement pourvu d'une protubérance radiale dirigée vers le centre de l'enceinte, dont la section transversale est sensiblement rectangulaire et la section longitudinale trapézoïdale, cette dernière section étant conçue de manière qu'elle présente un grand côté faisant face au tronc de cône et parallèle à la pente de celui-ci, une petite base parallèle à l'axe central de l'enceinte et ménageant entre elle et la surface extérieure d'une bague cylindrique, prolongeant le tronc de cône en direction de la filière et de plus grand diamètre que celui de la petite base de ce tronc de cône, un passage de section plus faible que celle d'un desdits orifices, et un petit côté parallèle au chanfrein dont est pourvue la bague cylindrique pour réduire le diamètre de celle-ci au diamètre de la petite base du tronc de cône sur laquelle cette bague est jointe.

Par ailleurs, le corps cylindrique de chaque coulisseau est engagé à ajustement glissant, du côté de la plaque de base de l'enceinte, sur une tige fixe portée par cette plaque et, du côté opposé à celle-ci, dans la partie de tête de l'enceinte, laquelle est pourvue d'une vis commandée de l'extérieur et engagée par filetage dans ce côté du corps cylindrique pour permettre le réglage de la position du coulisseau et, par là, de la protubérance radiale de celui-ci. On doit noter, en outre, que le passage déterminé entre la petite base de la protubérance de chaque coulisseau et la surface cylindrique extérieure de la bague, lorsque ce coulisseau est réglé à sa position maximale de déplacement en direction de la filière, est le passage de calibrage minimal de la veine de matière correspondante et, par suite, celle-ci est réglée à son débit minimal.

D'autre part, cette enceinte d'extrusion est pourvue d'une partie de tête cylindrique portant axialement, dans son alésage cylindrique, une filière d'extrusion et définissant intérieurement une chambre arrière à celle-ci, cette chambre étant remarquable, conformément à l'invention, du fait qu'elle est délimitée, du côté de la bague cylindrique prolongeant le tronc de cône, par un plateau constituant la base de fixation de la partie de tête et traversé par des canaux de passage des veines de matière calibrées, concentriques à la bague sur l'extrémité de laquelle est plaquée la partie centrale de ce plateau et, du côté de la filière, par la face arrière de celle-ci qui est conformée pour être en relation d'homothétie avec la configuration de la distribution des veines calibrées es équilibrées en fonction de la géométrie du profilé a extruder. En outre, la partie centrale du plateau est pourvue d'une pièce de guidage de la face intérieure des veines calibrées en direction de la filière, cette pièce étant de forme conique, tronconique ou cylindrique suivant la section du profilé à extruder, et la filière est supportée par le fond d'une cuvette engagée dans l'alésage cylindrique de la partie de tête et dont la paroi intérieure est adaptée à une forme correspondante à celle de la pièce de guidage, le bord intérieur de cette cuvette étant plaqué sur le plateau de base concentriquement aux canaux de passage des veines calibrées.

Selon un autre mode de réalisation, la filière d'extrusion adaptée en tête de cette enceinte d'extrusion est constituée sous forme d'un ensemble comprenant essentiellement trois pièces emmanchées coniquement entre elles, c'est-à-dire une couronne circulaire de montage sur la bride ou plateau avant de l'enceinte d'extrusion, une cuvette d'extrusion emmanchée dans l'alésage conique de la couronne et pourvue, dans la partie centrale de son fond, d'un orifice définissant la forme précise de la paroi extérieure du profilé à extruder, et un bloc central emmanchée dans cette cuvette, du même côté que celle-ci par rapport à ladite couronne, pourvu d'orifices d'extrusion situés en aval des veines calibrées de matière extrudée, et d'un prolongement axial saillant du côté du fond de la cuvette, engagé dans ledit orifice de la partie centrale de ce fond et définissant, par le contour de sa forme extérieure, la forme de la paroi intérieure du profilé à extruder.

De manière plus spécifique et conformément à l'invention, la couronne circulaire de montage de cet ensemble de filière d'extrusion est pourvue de trous épaulés, correspondant à la position radiale des distributeurs de veines calibrées de l'enceinte d'extrusion et adaptés pour accepter l'engagement à adjustement glissant du corps cylindrique du coulisseau de chaque distributeur correspondant, ainsi que la vis de réglage de position de celui-ci, commandée de l'extérieur, cette couronne comportant, en outre, des trous distribués circonférentiellement pour sa fixation sur la bride ou le plateau avant de l'enceinte.

D'autre part, la cuvette d'extrusion emmanchée coniquement dans la couronne, dans le sens de l'écoulement des veines de matière extrudée, comporte une partie d'alésage conique épaulé destiné à recevoir, dans le même sens, l'engagement bloqué dudit bloc central, l'épaulement de cette partie d'alésage conique étant situé de manière à ménager, entre le fond de la cuvette et la paroi avant du bloc lui faisant face, une chambre d'extrusion interne à la filière, de forme tronconique ou cylindrique suivant la section du profilé à extruder, et dans laquelle débouchent les veines calibrées de matière extrudée ayant traversé les orifices d'extrusion dudit bloc. On doit noter, en outre, que cette cuvette comporte, du côté opposé à ladite enceinte, une partie d'alésage cylindrique délimitant une cavité en avant de son fond, dans laquelle saille l'extrémité libre dudit prolongement du block central ayant la forme de l'intérieur de profilé à extruder.

Par ailleurs, on doit noter également que cet ensemble de filière d'extrusion constitue, lorsque les trois pièces qui le composent sont emmanchées les unes dans les autres, un bloc cylindrique à parois lisses et parallèles, les faces d'extrémité de ces pièces étant arasées au même niveau dans le même plan. En outre, afin de permettre l'étaiement et/ou le talquage du profilé extrudé, immédiatement à la sortie de la filière, la courone est pourvue d'un passage d'injection d'air talqué ou non, à partir de l'extérieur à cet ensemble, ce passage étant constitué par un perrçage débouchant dans une gorge circonférentielle intérieure à l'alésage de cette couronne, laquelle gorge est en communication, par l'intermédiaire de trous radiaux traversant la paroi circulaire de la cuvette, avec une autre gorge circonférentielle pratiquée dans la paroi extérieure du bloc central, cette autre gorge étant elle-même mise en communication, par l'intermédiaire de perçages radiaux pratiqués dans ce bloc, avec un trou borgne axial audit prolongement de ce dernier et débouchant dans l'extrémité avant de ce prolongement.

D'autres caractéristiques de la présente invention apparaîtront de la description suivante, faite en relation avec deux modes de réalisation, donnés à titre d'exemples non limitatifs, d'une enceinte d'extrusion avec filière représentée dans les dessins ci-joints dans lesquels:

La figure 1 représente une demi-vue en couple longitudinale et une demi-vue extérieure longitudinale d'une enceinte d'extrusion avec sa filière de tête, suivant un premier mode de réalisation;

la figure 2 représente une demi-vue en couple transversale et une demi-vue extérieure de face de l'enceinte de la figure 1, la coupe transversale étant prise suivant les filèches D—D de cette dernière;

la figure 3 représente une vue en coupe partielle de l'ensemble de filière d'extrusion, suivant une second mode de réalisation conforme à l'invention.

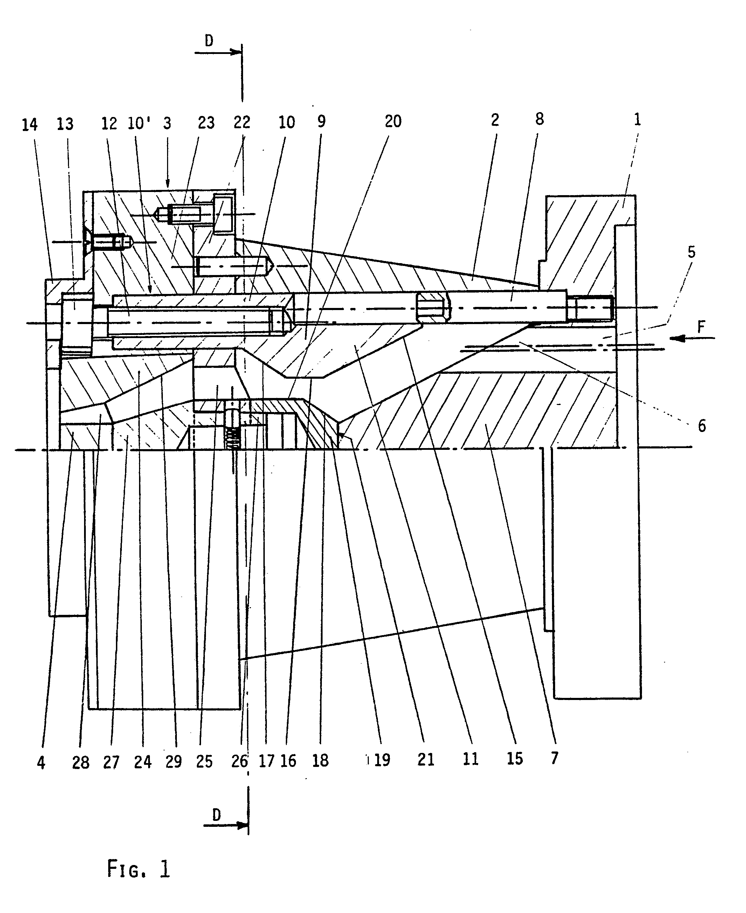

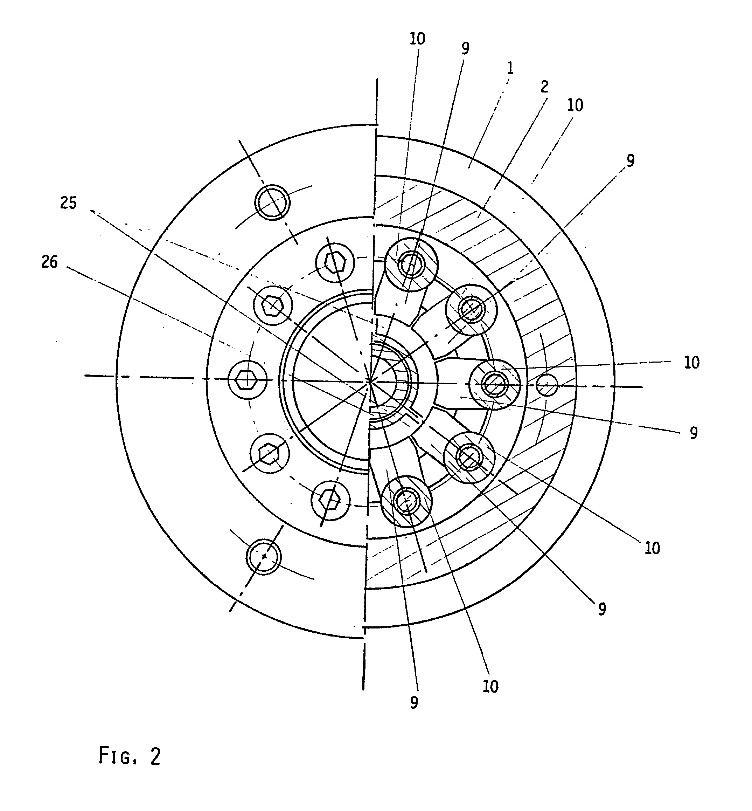

Comme représenté dans les figures 1 et 2, l'enceinte d'extrusion, conforme à l'invention, comporte une plaque de base 1 adaptable sur la sortie d'une boudineuse (non représentée), une partie de corps intermédiaire 2 fixée sur la plaque 1 et solidaire de celle-ci, et une partie de tête 3, fixée sur la partie 2 et portant l'ensemble de filière 4 de sortie adaptée pour extruder un profilé de géométrie déterminée.

La plaque de base 1 de cette enceinte d'extrusion est percée d'orifices radiaux 5 de même diamètre et de formation de veines de matière extrudée sous pression déterminée, due à la vis de la boudineuse, ces orifices 5 étant distribués à équidistance les uns des autres sur une même circonférence, dont le centre constitue celui de l'enceinte et où passe l'axe longitudinal de celle-ci. A noter que ces orifices 5 ont une section totalisée équivalente à celle engendrée par la section du filet de la vis de la boudineuse (non représentée) extrudant la matière suivant la flèche F de la figure 1. Ces orifices ont en outre pour fonctions d'annuler le phénomène de rotation de la matière extrudée et de maîtriser la turbulence de celle-ci à la sortie de la boudineuse. Ils sont prolongés du côté enceinte par des orifices 6 de diamètre correspondant, percés dans la partie de base d'un tronc de cône 7 de guidage interne des veines de matière extrudée, ce tronc de cône étant fixe et solidaire de la plaque 1 et ayant une circonférence de base circonscrite à l'extérieur des orifices 5.

La partie de corps 2 de l'enceinte est constituée par une enveloppe de forme extérieure tronconique ou cylindrique et àalésage cylindrique, concentrique à l'extérieur de tiges de guidage 8 des organes 9, distributeurs et calibreurs des veines de matière extrudée, à leur sortie des orifices 6. Les tiges 8 sont fixées et bloquées dans des perçages taraudés de la plaque 1, concentriques aux orifices 5 et en correspondance radiale à ceux-ci. Les organes 9 sont constitués par des coulisseaux adaptés pour pouvoir glisser à ajustement libre sur les tiges 8. Chaque coulisseau 9 est formé d'un corps cylindrique de coulissement 10 pourvu d'une protubérance radiale 11 dirigée vers le centre ou axe longitudinal de l'enceinte. L'extrémité du corps cylindrique de chaque coulisseau, située du côté de la partie de tête 3 de l'enceinte, est engagée à ajustement glissant dans un trou borgne 10' de cette dernière, ajusté et situé de manière que le coulisseau puisse être déplacé à la demande, vers la plaque 1 ou en sens contraire, et parallèlement à l'axe longitudinal de l'enceinte, au moyen d'une vis de réglage 12 commandée de l'extérieur avant à cette dernière. A noter que chaque vis 12 traverse la partie de tête 3 de l'enceinte, est engagée par filetage dans l'extrémité du corps cylindrique du coulisseau correspondant, et porte une tête de commande 13 logée dans un flaque d'extrémité 14 de l'enceinte. Par ailleurs, la protubérance 11 de chaque coulisseau est de section transversale sensiblement rectangulaire, la largeur de celle-ci étant déterminée pour présenter un faible jeu d'une protubérance à l'autre, et afin que l'ensemble de ces sections constitue une couronne circulaire à paroi interne continue, délimitant le profil externe de calibrage ou laminage des veines de matière extrudée. La section longitudinale de chaque protubérance 11 est par contre sensiblement sous forme d'un trapèze dont le grand côté 15 est parallèle à la pente extérieure du tronc de cône 7, la petite base 16 parallèle à l'axe longitudinal de l'enceinte, et le petit côté 17 parallèle au chanfrein 18 d'un bague centrale 19 prolongeant le tronc de cône 7 en direction de l'ensemble de filière 4.

A noter que la hauteur de chaque protubérance est déterminée de façon que celle-ci puisse obturer l'orifice 6 qui lui correspond, lorsque le coulisseau qui la porte est déplacé à sa position maximale en direction du plateau de base 1 et que, par contre, lorsque ce coulisseau est déplacé à sa position maximale en direction de la partie de tête 3, un passage réduit déterminé subsiste entre la petite base 16 et la paroi extérieure 20 cylindrique de la bague 19. Cette bague 19 est de ce fait prévue d'un diamètre extérieur plus grand que celui de la petite base 21 du tronc de cône sur laquelle son extrémité, de même diamètre que cette petite base et portant le chanfrein 18, est appliquée, ce dernier étant prévu de manière que, lorsque n'importe lequel des coulisseaux 9 est déplacé vers la plaque de base 1, le passage de calibrage ou de laminage ainsi que de limitation de débit de la veine de matière correspondante, soit augmenté entre la petite base 17 de la forme trapézoïdale de la protubérance et le chanfrein 18, par rapport au passage réduit de calibrage minimal de la veine qui peut exister par suite du réglage du coulisseau, entre la petite base 16 de cette forme trapézoïdale et la paroi extérieure 20 cylindrique de la bague 19.

La partie de tête 3 de l'enceinte est constituée d'un plateau 22, plaqué sur l'extrémité avant du corps 2 de celle-ci et supportant une couronne 23, dans l'alésage de laquelle est engagée la cuvette 24 de l'ensemble de filière 4, cette couronne 23 portant également, fixé sur son extrémité avant, le flasque 14 logeant les têtes de commandes 13 des vis de réglage 12. Le plateau 22 est traversé par des passages 25, en forme de segments circulaires, qui dirigent les veines de matière calibrées par les organes distributeurs ou coulisseaux 9, en direction de l'ensemble de filière 4. A noter que ces passages 25 ont un diamètre intérieur égal au diamètre extérieur de la bague 19 et un diamètre extérieur plus fort que le diamètre du cercle inscrit par les petites bases 16 des protubérances des coulisseaux. En outre, le plateau 22 est pourvu d'un alésage central dans lequel est engagé le tourillon central 26 d'une pièce 27 de guidage interne des veines calibrées dans le passage d'extrusion 28 de l'ensemble de filière 4, ces veines étant guidées extérieurement par la paroi interne 29 de la cuvette 24. Par ailleurs, le tourillon 26 est prévu plus long que l'épaisseur de la partie centrale du plateau 22, de façon à ce que son extrémité libre soit engagée dans l'alésage de la bague 19, si bien que celle-ci, déjà située dans le prolongement du tronc de cône 7, se trouve en position alignée avec la pièce 27 et le corps central de la filière.

On doit remarquer que la paroi extérieure de la pièce 27 et la paroi intérieure 29 de la cuvette ·24, délimitant la chambre d'extrusion en aval immédiat de la filière, sont représentées de forme tronconique, mais il convient de signaler qu'elles peuvent être prévues l'une et/ou l'autre avec une conicité plus prononcée, ou encore, de forme cylindrique, en fonction de la section du profil à extruder, note étant prise, comme il a été dit précédemment, que la face arrière, ou interne à l'enceinte, de la filière, ainsi que ses passages d'extrusion, sont définis en fonction de la géométrie du profilé à extruder et en relation d'homothétie avec la configuration de la distribution des veines calibrées et équilibrées fournie par le réglage de position des organes distributeurs 9. De manière plus spécifique, la sortie de la filière présente un passage pour la matière extrudée ayant une géométrie et une section identiques à celles du profilé à extruder, le prolongement de ce passage vers l'arrière ou entrée de la filière ayant une configuration qui s'agrandit progressivement, en relation homothétique avec sa sortie et avec la configuration de la distribution des veines calibrées à leur sortie des organes distributeurs, avant la pénétration de ces dernières dans les passages 25 du plateau 22. En outre, étant donné que la face arrière de la filière, comme on l'a définie précédemment, a une configuration en relation homothétique avec cette distribution des veines calibrées, il s'ensuit que ces dernières, après leur calibrage ou laminage et réglage de leur débit produits par les organes distributeurs, ont des parcours de longueurs sensiblement identiques à faire pour gagner l'entrée de la filière sur la face arrière de celle-ci.

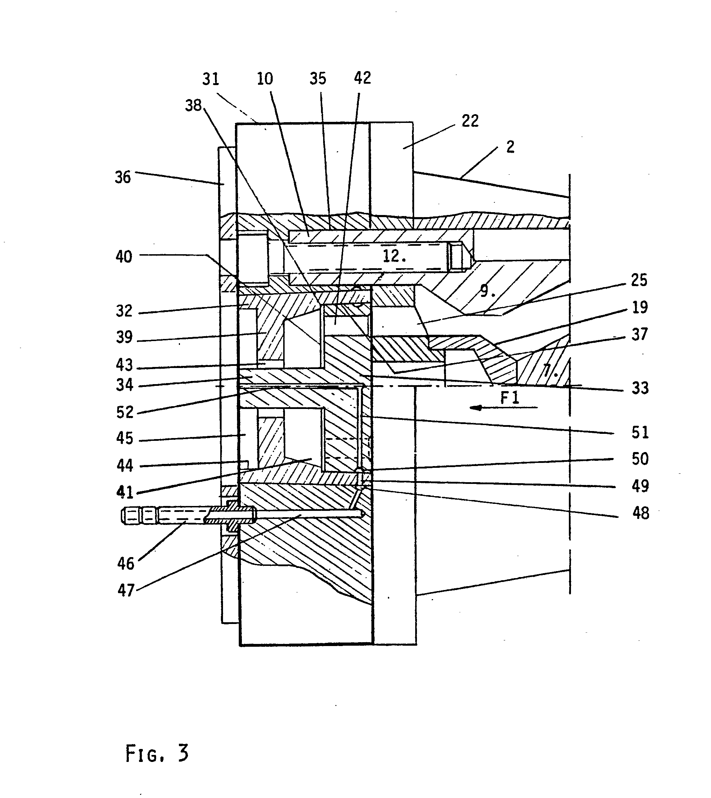

Si l'on se réfère maintenant à la figure 3, qui représente un second mode de réalisation de l'ensemble de filière adapté en tête de l'enceinte d'extrusion, on remarque que cet ensemble est constitué de trois pièces emmanchées coniquement entre elles dans le sens d'écoulement des veines calibrées de matière extrudée, sens indiqué par la flèche F1, et comprenant une couronne circulaire 31 de montage sur le plateau avant 22 de l'enceinte, une cuvette d'extrusion 32 emmanchée dans l'alésage conique de la couronne 31, et un bloc central 33 emmanché dans cette cuvette et pourvu d'un prolongement axial 34 saillant à travers le fond de cette dernière.

De manière plus précise, la couronne circulaire 31 est pourvue de trous épaulés 35, correspondant à la position radiale des distributeurs 9 et adaptés pour loger, à ajustement glissant, le corps cylindrique 10 du coulisseau de chaque distributeur correspondant, ainsi que la vis de réglage 12 de position de celui-ci, commandée en rotation depuis l'avant de cette couronne par l'introduction d'une clé, dans les orifices correspondants de la plaque frontale 36, empêchant les vis de réglage 12 de reculer sous la pression exercée sur les distributeurs par les veines de matière extrudée. Cette couronne 31 comporte, en outre, des trous (non représentés) distribués circonférentiellement, pour ses vis de fixation sur le plateau avant 22 de l'enceinte d'extrusion.

La cuvette d'extrusion 32 comporte une partie d'alésage conique 37 épaulé, maintenant à engagement bloqué, dans le sens de la flèche F1, le bloc central 33. L'épaulement 38 de cette partie d'alesage conique 37 est situé de manière à ménager, entre le fond 39 de la cuvette et la paroi avant 40 du bloc, une chambre d'extrusion 41, interne à la filière et de forme tronconique ou cylindrique suivant la section du profilé à extruder, cette chambre 41 recevant les veines calibrées par l'intermédiaire des orifices d'extrusion 42 traversant le bloc 33 et situés radialement en aval des distributeurs 9. On remarquera que le fond 39 de cette cuvette est pourvu d'un orifice axial 43, définissant la forme précise de la paroi extérieure de profilé à extruder, et traversé par le prolongement axial 34 du block 33, définissant la forme précise de la paroi intérieure de ce profilé. On notera, en outre, que le cuvette 32 comporte une partie d'alésage cylindrique 44, délimitant une cavité protectrice 45 en avant de son fond, dans laquelle saille l'extrémité libre du prolongement 34.

Par ailleurs, on doit noter que cet ensemble de filière d'extrusion constitue, avec ses pièces assemblées, un bloc cylindrique à parois lisses et parallèles, les faces d'extrémité de ces pièces étant arasées au même niveau dans le même plan.

En outre, afin d'étayer le profilé en cours d'extrusion, à sortie immédiate de la filière, la couronne 31 est pourvue d'un passage d'injection d'air talqué ou non, relié à une alimentation extérieure par l'intermédiaire d'un embout 46 de fixation de tuyau. Ce passage d'injection est constitué par un perçage 47 débouchant dans une gorge circonférentielle 48, intérieure à l'alésage de la couronne 31, laquelle gorge est mise en communication, par l'intermédiaire d'un trou radial 49 traversant la paroi latérale de la cuvette 32, avec une autre gorge circonférentielle 50, pratiquée dans la paroi extérieure du bloc 33 et mise en communication, par l'intermédiaire de perçages radiaux 51 de ce bloc, avec un trou borgne 52, axial au prolongement 34 et débouchant dans l'extrémité libre de celui-ci. Il est évident que ces divers perçages, gorges et trou axial permettent une distribution effective d'air talqué ou non dans l'intérieur du profilé, immédiatement à sa sortie de la filière.

En définitive, comme on peut le déduire de cette description de deux modes de réalisation de l'enceinte d'extrusion avec filière incorporée, conforme à l'invention, les conditions nécessaires à l'extrusion d'un profilé suivant une section et une géométrie constantes sont respectées. En effet, comme on l'a énoncé précédemment, ces conditions résultant d'essais préalables devaient être les suivantes:

—Pouvoir régler des distributeurs de veines de matière extrudée, disposés radialement suivant une couronne circulaire, afin de calibrer ou laminer ces veines à une épaisseur déterminée en relation homothétique avec l'épaisseur de profilé à extruder, de forme tubulaire ou non.

—Pouvoir commander et contrôler le débit d'écoulement de chaque veine de matière extrudée, de manière constante.

—Conduire les veines ainsi réglées et serrées les unes contre les autres pour devenir solidaires entre elles, jusqu'à l'entrée arrière de la filière, en leur faisant parcourir une même longueur de trajet.

On doit convenir que dans cette enceinte d'extrusion réalisée, les deux premières conditions sont remplies par les organes distributeurs 9 coulissant longitudinalement à la demande sur la commande des vis de réglage 12, et que la troisième condition est remplie par suite de la configuration de la face d'entrée de la filière, faite en relation homothétique avec la configuration de la distribution des veines de matière à la sortie des organes distributeurs 9, cette dernière configuration étant faite elle-même en relation homothétique avec la géométrie du profilé à extruder.

**Revendications**

1. Enceinte d'extrusion à distribution circulaire contrôlée de la matière extrudée et à filière (4) incorporée, adaptée pour extruder notamment des profilés en matières thermoplastiques de section tubulaire ou non, et pour être montée sur la sortie d'une boudineuse, cette enceinte comprenant une plaque de base (1) et de montage en bout de la boudineuse, traversée par des orifices (5) de formation de veines de matière, situés sur une même circonférence et équidistants entre eux, et pourvue, à l'intérieur de l'enceinte, d'un tronc de cône (7) percé d'orifices (6), situés dans le prolongement des orifices (5) de formation de veines et débouchant dans sa surface latérale, ce tronc de cône (7) étant entouré par des distributeurs (9) concentriques radiaux, situés en correspondance radiale avec ses orifices de passage de veines et montés de manière à pouvoir coulisser parallèlement à son axe central ou axe longitudinal de l'enceinte, suite à une opération de réglage de position commandée depuis l'extérieur à cette dernière, enceinte d'extrusion caractérisée par le fait que chaque distributeur radial (9) est constitué par un coulisseau ayant un corps cylindrique (10) de coulissement pourvu d'une protubérance radiale (11) dirigée vers le centre de l'enceinte, dont la section transversale est sensiblement rectangulaire et la section longitudinale trapézoïdale, cette dernière section étant conçue de manière qu'elle présente un grand côté (15) faisant face au tronc de cône (7) et parallèle à la pente de celui-ci, une petite base (16) parallèle à l'axe central de l'enceinte et ménageant entre elle (16) et la surface extérieure (20) d'une bague cylindrique (19), prolongeant le tronc de cône (7) en direction de la filière (4) et de plus grand diamètre que celui de la petite base (21) de ce tronc de cône (7), un passage de section plus faible que celle d'un desdits orifices (6), et un petit côté (17) parallèle au chanfrein (18) dont est pourvue la bague cylindrique (19) pour réduire le diamètre de celle-ci au diamètre de la petite base (21) du tronc de cône (7) sur laquelle cette bageue (19) est jointe.

2. Enceinte d'extrusion selon la revendication 1, caractérisée par le fait que le corps cylindrique de chaque coulisseau ou distributeur (9) est engagé à ajustement glissant, du côté de la plaque de base (1) de l'enceinte, sur une tige fixe (8) portée par cette plaque et, du côté opposé à celle-ci, dans la partie de tête (3) de l'enceinte, laquelle est pourvue d'une vis (12) commandée de l'extérieur et engagée par filetage dans ce côté du corps cylindrique (10) pour permettre le réglage de la position du coulisseau et, par là, de la protubérance radiale (11) de celui-ci.

3. Enceinte d'extrusion selon la revendication 1, caractérisée par le fait que la hauteur de la protubérance radiale (11) de chaque coulisseau ou distributeur (9) est déterminée de façon que, lorsque ce dernier est à sa position de déplacement maximal en direction de la partie de tête (3) de l'enceinte, le passage entre la surface cylindrique extérieure (20) de la bague (19) prolongeant le tronc de cône (7) et la petite base (16) de cette protubérance trapézoïdale (11) soit le passage minimal de calibrage de la veine de matière correspondante et, par là, amenant celle-ci à son débit minimal.

4. Enceinte d'extrusion selon la revendication 1, pourvue d'une partie de tête cylindrique (3) portant axialement dans son alésage cylindrique une filière d'extrusion (4) et définissant intérieurement une chambre arrière à celle-ci, caractérisée par le fait que cette chambre arrière à la filière (4) est délimitée, du côté de la bague cylindrique (19) prolongeant le tronc de cône (7), par un plateau (22) constituant la base de fixation de la partie de tête (3) et traversé par des canaux (25) de passage des veines de matière calibrées, concentriques à la bague (19) sur l'extrémité de laquelle est plaquée la partie centrale de ce plateau (22) et, du côté de la filière (4), par la face arrière de celle-ci qui est conformée pour être en relation d'homothétie avec la configuration de la distribution des veines calibrées et équilibrées en fonction de la géométrie du profilé à extruder.

5. Enceinte d'extrusion selon la revendication 4, caractérisée par la fait que la partie centrale du plateau (22) de base et de fixation de la partie de tête (3) est pourvue d'une pièce de guidage (27) de la face intérieure des veines calibrées en direction de la filière (4), cette pièce étant de forme conique, tronconique ou cylindrique suivant la section du profilé à extruder, et la filière (4) est supportée par le fond d'une cuvette (24) engagée dans l'alésage cylindrique de la partie de tête et dont la paroi intérieure (29) est adaptée à une forme correspondante à celle de la pièce de guidage (27), le bord intérieur de cette cuvette étant plaqué sur le plateau (22) de base concentriquement aux canaxu (25) de passage des veines calibrées.

6. Enceinte d'extrusion selon la revendication 1, pourvue en tête d'un ensemble de filière d'extrusion, caractérisée par le fait que cet ensemble de filière est constitué essentiellement de trois pièces (31, 32, 33) emmanchées coniquement entre elles dans le sens d'écoulement de la matière extrudée et comprenant une couronne circulaire (31) de montage sur la bride ou plateau avant (22) de l'enceinte d'extrusion, une cuvette d'extrusion (32) emmanchée dans l'alésage conique de la couronne (31) et pourvue, dans la partie centrale de son fond (39), d'un orifice (43) définissant la forme précise de la paroi extérieure du profilé à extruder, et un bloc central (33) emmanché dans cette cuvette (32), du même côté que celle-ci par rapport à ladite couronne (31), pourvu d'orifices d'extrusion (42) situés en aval des veines calibrées de matière extrudée, et d'un prolongement axial (34) saillant du côté du fond (39) de la cuvette (32) engagé dans ledit orifice (43) de la partie central de ce fond (39) et définissant, par le contour de sa forme extérieure, la forme de la paroi intérieure du profilé à extruder.

7. Enceinte d'extrusion selon la revendication 6, caractérisée par la fait que la couronne circulaire de montage (31) de l'ensemble de filière est pourvue de trous épaulés (35), correspondant à la position radiale des distributeurs (9) de veines calibrées de l'enceinte d'extrusion et adaptés pour accepter l'engagement à ajustement glissant du corps cylindrique (10) du coulisseau de chaque distributeur correspondant, ainsi que la vis de réglage (12) de position de celui-ci, commandée de l'extérieur, cette couronne (31) comportant, en outre, des trous distribués circonférentiellement pour sa fixation sur la bride ou le plateau avant (22) de l'enceinte.

8. Enceinte d'extrusion selon l'une ou l'autre des revendications 6 ou 7, caractérisée par le fait que la cuvette d'extrusion (32) emmanchée coniquement dans la couronne (31), dans le sens de l'écoulement des veines de matière extrudée, comporte une partie d'alésage conique (37) épaulé destiné à recevoir, dans le même sens, l'engagement bloqué dudit bloc central (33), l'épaulement (38) de cette partie d'alésage conique étant situé de manière à ménager, entre le fond (39) de la cuvette (32) et la paroi avant du bloc (33) lui faisant face, une chambre d'extrusion (41) interne à la filière, de forme tronconique ou cylindrique suivant la section de profilé à extruder, et dans laquelle débouchent les veines calibrées de matière extrudée ayant traversé les orifices d'extrusion (42) dudit bloc (33).

9. Enceinte d'extrusion selon la revendication 8, caractérisée par le fait que la cuvette (32) comporte, du côté sortie de la filière, une partie d'alésage cylindrique (44) délimitant une cavité en avant de son fond (39), dans laquelle saille l'extrémité libre dudit prolongement (34) du bloc central (33) ayant la forme de l'intérieur du profilé à extruder.

10. Enceinte d'extrusion selon l'une quelconque des revendications 6 à 9, caractérisée par le fait que, pour permettre l'étraiement et/ou le talquage du profilé extrudé, immédiatement à la sortie de la filière, la couronne (31) de l'ensemble de filière est pourvue d'un passage d'injection d'air talqué ou non, à partir de l'extérieur, ce passage étant constitué par un perçage (47) débouchant dans une gorge circonférentielle (48) intérieure à l'alésage de cette couronne (31), laquelle gorge (48) est en communication, par l'intermédiaire de trous radiaux (49) traversant la paroi circulaire de la cuvette (32), avec une autre gorge circonférentielle (50) pratiquée dans la paroi extérieure du bloc central (33), cette autre gorge (50) étant elle-même mise en communication, par l'intermédiaire de perçages radiaux (51) pratiqués dans ce bloc, avec un trou borgne (52) axial audit prolongement (34) de ce dernier et débouchant dans l'extrémité avant de ce prolongement.

## Patentansprüche

1. Extrusionsanlage mit gesteuerter Kreisverteilung des extrudierten Materials und eingebauter Spritzdüse insbesondere zum Extrudieren von Profilen aus thermoplastischen Materialien von röhrenförmigem oder nicht röhrenförmigem Querschnitt zur Montage auf dem Auslaß einer Strangpresse, wobei die Anlage zur Montage am Ende der Strangpresse eine Grundplatte (1) aufweist, durch die zur Bildung von Materialadern Öffnungen (5) hindurchgehen, die sich auf dem gleichen Kreisumfang und in gleichen Abstand voneinander befinden, und daß die Grundplatte (1) im Inneren der Anlage mit einem von Öffnungen (6) durchbohrten Kegelstumpf (7) versehen ist, die sich in der Verlängerung der Aderbildungsöffnungen (5) befinden und in die Seitenfläche des Kegelstumpfes (7) münden, wobei der Kegelstumpf (7) von konzentrischen radialen Verteilern (9) umgeben ist, die sich in radialer Übereinstimmung mit Aderdurchgangsöffnungen befinden und so angeordnet sind, daß sie parallel zu ihrer Mittelachse oder der Längsachse der Anlage entsprechend einem von außerhalb der Anlage gesteuerten Positionierungsvorgang gleiten können, wobei die Extrusionsanlage dadurch gekennzeichnet ist, daß jeder radiale Verteiler (9) durch einen Schieber gebildet ist, der einen zylindrischen Gleitkörper (10) aufweist, der mit einem radialen, zur Mitte der Anlage gerichteten Vorsprung (11) versehen ist, dessen Querschnitt im wesentlichen rechtwinklig und dessen Längsschnitt trapezförmig ist, wobei der Längsschnitt so ausgestaltet ist, daß er einen langen Schenkel (15) bildet, der dem Kegelstumpf (7) gegenüberliegt und parallel zu dessen Schrägkante verläuft, eine kleine Grundfläche (16) parallel zur Mittelachse der Anlage, die zwischen sich und der Außenfläche einer Zylinderbuchse (19), die den Kegelstumpf in Richtung der Spritzdüse (4) verlängert und von größerem Durchmesser ist als der der kleinen Grundfläche (21) des Kegelstumpfes, einen Durchgang von kleinerem Durchmesser als dem einer der Öffnungen (6) bildet, und einen kurzen Schenkel (17) parallel zur Schrägkante (18) aufweist, mit der die Zylinderbuchse (19) versehen ist, um den Durchmesser der Buchse auf den Durchmesser der kleinen Grundfläche (21) des Kegelstumpfs zu reduzieren, an die die Buchse (19) anschließt.

2. Extrusionsanlage nach Anspruch 1, dadurch gekennzeichnet, daß der Zylinderkörper jedes Schiebers oder Verteilers (9) im Gleitsitz auf der Seite der Grundplatte (1) der Anlage mit einem festen, durch die Platte getragenen Schaft (8) und auf der gegenüberliegenden Seite mit dem Teil des Anlagenkopfes (3) in Eingriff kommt, der eine Schraube aufweist, die von außen gesteuert und durch Gewinde mit dieser Seite des Zylinderkörpers (10) im Eingriff ist, um die Positionsregelung des Schiebers und dadurch die seines radialen Vorsprungs (11) zur ermöglichen.

3. Extrusionsanlage nach Anspruch 1, dadurch gekennzeichnet, daß die Höhe des radialen Vorsprungs (11) jedes Schiebers oder Verteilers (9) so bemessen ist, daß der Durchgang zwischen der äußeren zylindrischen Fläche (20) der Buchse (19), die den Kegelstumpf (7) verlängert, und der kleinen Grundfläche (16) des trapezförmigen Vorsprungs der Minimalkalibrierdurchgang der entsprechenden Materialader ist und diese dadurch zu ihrem geringsten Durchsatz gebracht wird, wenn der Schieber oder Verteiler sich in seiner maximalen Verschiebeposition in Richtung des Kopfteils (3) der Anlage befindet.

4. Extrusionsanlage nach Anspruch 1, versehen mit einen zylindrischen Kopfteil 3, das axial in seiner Zylinderbohrung eine Extrusionsspritzdüse (4) und im Innener dahinter eine Kammer definiert, dadurch gekennzeichnet, daß die Kammer hinter der Spritzdüse (4) auf der Seite der Zylinderbuchse (19), die den Kegelstumpf (7) verlängert, durch eine Platte (22) begrenzt wird, die die Befestigungsbasis des Kopfteils (3) bildet und von Kanälen (25) für den Durchgang der kalibrierten Materialadern durchquert wird, die konzentrisch zur Buchse (19) angeordnet sind, auf deren Ende das Mittelteil der Platte (22) aufliegt, und auf der Seite der Spritzduse (4) durch ihre Rückseite begrenzt ist, die so ausgestaltet ist, daß sie in homothetischem Verhältnis zur Konfiguration der Verteilung der in Abhängigkeit von der Form des zu extrudierenden Profils kalibrierten und ausgeglichenen Adern steht.

5. Extrusionsanlage nach Anspruch 4, dadurch gekennzeichnet, daß das Mittelteil der Grundung Befestigungsplatte (22) des Kopfteils (3) mit einem Teil (27) zur Führung der Innenfläche der kalibrierten Adern in Richtung der Spritzdüse (4) versehen ist, wobei dieses Teil je nach Querschnitt des zu extrudierenden Profils konisch, kegelstumpfförmig oder zylindrisch ist, und daß die Spritzdüse durch den Boden des Behälters (24) gestützt wird, der mit der Zylinderbohrung des Kopfteils in Eingriff ist und dessen Innenwand (29) eine dem Führungsteil (27) entsprechende Form aufweist, wobei der Innenrand des Behälters auf der Grundplatte (22) konzentrisch zu den Durchgangskanälen (25) der kalibrierten Adern angeordnet ist.

6. Extrusionsanlage nach Anspruch 1, die in vorderen Teil mit einem Spritzdüsenaggregat versehen ist, dadurch gekennzeichnet, daß das Spritzdüsenaggregat im wesentlichen aus drei Teilen (31, 32, 33) besteht, die konisch ineinander in Richtung des Flusses des extrudierten Materials aufgezogen sind und einen Kreiskranz (31) zur Montage auf dem Flansch oder der Vorderplatte (22) der Extrusionsanlage, einen Extrusionsbehälter (32), der in der konischen Ausbohrung des Kranzes (31) aufgezogen und in der Mitte seines Bodens (39) mit einer Öffnung (43) versehen ist, die die genaue Form der Außenwand des zu extrudierenden Profils definiert, und einen Mitteblock (33) umfassen, der in diesem Behälter (32) auf der gleichen Seite wie dieser im Verhältnis zum Kranz (31) aufgezogen und mit Extrusionsöffnungen (42), die unterhalb der kalibrierten Adern des extrudierten Materials liegen, und mit einer axialen Verlängerung (34) versehen ist, die auf der Seite des Bodens (39) des Behälters (32) vorspringt, mit der Öffnung (43) des Mittelteils des Bodens (39) im Eingriff ist und durch den Umriß ihrer äußeren Form die Form der Innenwand des zu· extrudierenden Profils definiert.

7. Extrusionsanlage nach Anspruch 6, dadurch gekennzeichnet, daß der Kreiskranz (31) zur Montage der Spritzdüseneinrichtung mit abgesetzten Löchern (35) versehen ist, die der radialen Position der Verteiler (9) der kalibrierten Adern der Extrusionsanlage entsprechen und zur gleitenden Aufnahme des Zylinderkörpers (10) des Schiebers jedes entsprechenden Verteilers sowie der von außen gesteuerten Schraube (12) zur Regelung seiner Position geeignet sind, wobei der Kranz (31) überdies peripheral verteilte Löcher für seine Befestigung auf dem Flansch oder der Vorderplatte (22) der Anlage aufweist.

8. Extrusionsanlage nach einem der Ansprüche 6 oder 7, dadurch gekennzeichnet, daß der Extrusionsbehälter (32), der konisch in Richtung des Flusses der Adern extrudierten Materials in dem Kranz (31) aufgezogen ist, einen abgesetzten Bohrungsteil (37) aufweist, der in gleicher Richtung den verriegelten Eingriff des Mittelblocks (33) aufnimmt, wobei der Absatz (38) des konischen Bohrungsteils so liegt, daß er zwischen dem Boden (39) des Behälters (32) und der ihm gegenüberliegenden Vorderwand des Blockes (33) je nach Querschnitt des zu extrudierenden Profils eine kegelstumpfförmige oder zylindrische Extrusionskammer (41) innerhalb der Spritzdüse bildet, in die die kalibrierten Adern extrudierten Materials münden, die durch die Extrusionsöffnungen (42) des Blockes (33) hindurchgegangen sind.

9. Extrusionsanlage nach Anspruch 8, dadurch gekennzeichnet, daß der Behälter (32) auf der Ausgangsseits der Spritzdüse ein zylindrisches Bohrungsteil (44) aufweist das vor seinem Boden (39) einen Hohlraum begrenzt, in den das freie Ende der Verlängerung (34) des Mittelblocks (33) mündet, das die Innenform des zu extrudierenden Profils hat.

10. Extrusionsanlage nach einem der Ansprüche 6 bis 9, dadurch gekennzeichnet, daß der Kranz (31) der Spritzdüseneinrichtung zur Aussteifung des extrudierten Profils und/oder seiner Einpuderung mit Talkum sofort nach Verlassen der Spritzdüse einen Durchgang für das Einblasen von talkumierter oder nicht talkumierter Luft von außen aufweist, wobei der Durchgang durch eine Bohrung (4) gebildet wird, die in einer peripheralen Rille (48) innerhalb der Bohrung des Kranzes (31) mündet, wobei die Rille (48) durch radiale Löcher (49), die durch die kreisförmige Wand des Behälters (32) hindurchgehen, mit einer anderen peripheralen Rille (50) in der Außenwand des Mittelblocks (33) verbunden ist, und diese andere Rillle (50) selbst durch radiale Bohrungen (51) im Block mit einem Sackloch (52) in Verbindung steht, das axial zur Verlängerung des Blocks angeordnet ist und in das vordere Ende der Verlängerung mündet.

**Claims**

1. Extrusion head having controlled circular distribution of the extruded material and having a nozzle (4) incorporated therein, said head being adapted for extruding in particular profiles in thermoplastic materials with tubular or non-tubular sections and for being mounted at the outlet of a plasticising machine, the head comprising a base plate (1) by which it is mounted on the end of the machine and in which are formed apertures (5) therethrough for the formation of veins of material, the apertures (5) being arranged on a common circle and being equidistant from one another, and being provided on the inside of the head with a frustoconical portion (7) in which are formed apertures (6) positioned as extensions to the reinforcing apertures (5) and opening into the side walls thereof, said frustoconical poriton (7) being surrounded by radial concentric distributors (9) arranged to coincide radially with the orifices through which the veins pass, and mounted so as to permit sliding movement parallel to the central axis or to longitudinal axis of the head, in response to a position-regulating operation controlled from outside the latter, the extrusion heading being characterised in that each radial distributor (9) comprises a slidable member having a cylindrical sliding body (10) provided with a radial protuberance (11) projecting towards the centre line of the head, the transverse section of which is substantially rectangular and the longitudinal section being trapezial, the latter section being taken such that is presents a longer side confronting the frustoconical portion (7) and parallel to the slope thereof, a small base (16) parallel to the central axis of the head and forming between it and the exterior surface (20) of a cylindrical ring (19)—which ring forms an extension of the frustoconical portion (7) in the direction of the nozzle (4) and is of a diameter greater than that of a small end face (21) of the frustoconical portion (7)—a passage of smaller cross-section than that of one of the said orifices (6), and a shorter side (17) parallel to the chamfered surface (18) provided on the cylindrical ring (19) which reduces the diameter of the latter to match that of the small end face (21) of the frustoconical portion (7) to which the ring is connected.

2. Extrusion head according to claim 1, characterised in that the cylindrical body each slidable member or distributor (9) is mounted for sliding adjustment at the side of the base plate (1) of the head, on a fixed shaft (8) carried by the plate and at the other side in the head portion (3) of the extrusion head, which portion is provided with a screw (12) operated from the exterior and threadedly engaged in the side of the cylindrical body to allow the position of the slidable member to be adjusted, and thereby that of the radial protuberance (11) thereof.

3. Extrusion head according to claim 1, characterised in that the height of the radial protuberance (11) of each slidable member or distributor (9) is determined so that, when the latter is in a position fully displaced towards the head portion (3) of the extrusion head, the passage between the external cylindrical surface (20) of the ring (19) extending the frustoconical portion (7) and the small base (16) of the trapezial protuberance (11) is the minimum metering passage for the appropriate vein of material and thereby supplying the latter at its minimum delivery rate.

4. Extrusion head according to claim 1, provided with a cylindrical head portion (3) which axially supports in its cylindrical bore an extrusion nozzle (4) and defines internally a chamber beind the latter, characterised in that this chamber behind the nozzle (4) is defined, at the side of the cylindrical ring (19), which extends the frustoconical portion, by a plate (22) constituting the mounting base for the head portion (3), which plate is traversed by channels (25) for the passage of the metered veins of material, said channels being concentric with the ring (19) on the end of which the central portion of said plate (22) is located, and, at the side of the nozzle (4), by the rearward face of the latter which is shaped to be in a homothetic relationship with the distribution arrangement for the veins, which are metered and balanced as a function of the geometry of the profile to be extruded.

5. Extrusion head according to Claim 4 characterised in that the central portion of the base plate (22) for mounting the head portion (3) is provided with an element (27) for guiding the inner face of the metered veins in the direction of the nozzle (4), this element having a conical, frustoconical or cylindrical shape according to the section of the profile to be extruded, and the nozzle (4) is supported by the bottom of a dished member (24) located in the cylindrical bore of the head portion, the inside wall (29) of said member being adapted to a shape corresponding to that of the guide element (27) and the inner margin of the dished member being located on the base plate (22) concentrically with the channels (25) for the passage of the metered veins.

6. Extrusion head according to Claim 1 provided with an extrusion nozzle assembly at its head, characterised in that this nozzle assembly is constituted essentially by three elements (31, 32, 33) fitted conically into one another in the direction of flow of the extruded material and comprising a circular crown (31) for mounting on the tie or front plate (22) of the extrusion head, a dished extrusion member (32) fitted into the conical bore of the crown (31) and provided, in the central portion of its base (39), with an orifice (43) defining the precise shape of the outer wall of the profile to be extruded, and a central block (33) fitted into this dished member (32), at the same side of the latter in relation to the crown (31), provided with extrusion orifices (42) arranged downstream of the metered veins of extruded material and with an axial extension (34) projecting from the side of the base (39) of the dished member (32), located in the orifice (43) of the central portion of this base (39) and defining, by the contour of its exterior shape, the shape of the inside wall of the profile to be extruded.

7. Extrusion head according to claim 6 characterised in that the circular crown (31) for mounting the nozzle assembly is provided with holes (35) having steps of shoulders formed therein, said holes corresponding to the radial position of the distributors (9) of metered veins of the extrusion head, said holes being suitable to accommodate, for sliding adjustment, the cylindrical body (10) of the slide of each corresponding distributor as well as the screw (12) for regulating the position of the latter, controlled from the outside, and said crown (31) comprising in addition circumferentially distributed

19 **0 031 742** 20

holes for securing it to the tie or front plate (22) of the head.

8. Extrusion head according to one or other of Claims 6 or 7 characterised in that the dished extrusion member (32) fitted conically into the crown (31), in the direction of flow of the veins of extruded material, comprises a conical bore portion (37) having steps or shoulders formed therein, said portions (37) being arranged sealingly to accommodate, in the same direction, said central block (33), the stepping (38) of said conical bore portion being arranged in such a manner as to form, between the base (39) of the dished member (32) and the front wall of the block (33) facing it, an extrusion chamber (41) inside the nozzle having a frustoconical or cylindrical shape according to the section of the profile to be extruded, and into which chamber the metered veins of extruded material flow out having traversed the extrusion apertures (42) of said block (33).

9. Extrusion head according to Claim 8 characterised in that the dished member (32) comprises, at the outlet side of the nozzle, a cylindrical bore portion (44) defining a cavity in front of its base (39), into which projects the free end of said extension (34) of the central block (33) having ths shape of the inside of the profile to be extruded.

10. Extrusion head according to any one of Claims 6 to 9 characterised in that, in order to allow the extruded profile to be supported and/or chalked, immediately at the outlet of the nozzle the crown (31) of the nozzle assembly is provided with a passage for injecting chalked or unchalked air, from the outside, this passage being constituted by a bore (47) opening into a circumferential throat (48) inside the bore of said crown (31), which throat (48) communicates, by means of radial holes (49) traversing the circular wall of the dished member (32), with a further circumferential throat (50) opening in the outer wall of the central block (33), this further throat (50) itself communicating by means of radial bores (51) formed in said block, with a blind hole (52) axial with said extension (34) of the latter and opening into the forward end of this extension.

FIG. 1

FIG. 2

FIG. 3